# EUROPÄISCHE PATENTANMELDUNG

(11) **EP 4 706 583 A1**
(43) Veröffentlichungstag der Anmeldung: **11.03.2026**
(21) Anmeldenummer: 25198466.2
(22) Anmeldetag: 27.08.2025
(51) Int. Cl.: A61C 1/00

(54) **LASERVORRICHTUNG ZUR BEARBEITUNG VON ZAHNHARTMATERIAL**

(30) Priorität: 05.09.2024 DE 102024125401
(71) Anmelder: JenLab GmbH, 12559 Berlin (DE)
(72) Erfinder: König, Karsten, 12559 Berlin (DE)
(74) Vertreter: Gleim Petri Patent- und Rechtsanwaltspartnerschaft mbB

(57) **Zusammenfassung**

Laservorrichtung (1) zur Bearbeitung von Zahnhartmaterial, umfassend eine erste ultrakurz gepulste Laserstrahlquelle (2) zur Bereitstellung eines Bearbeitungs-Laserstrahls (20), die derart ausgebildet ist, um den Bearbeitungs-Laserstrahl (20) auf einen vorbestimmten Bearbeitungsbereich von Zahnhartmaterial aufzubringen, eine zweite Laserstrahlquelle (3) zur Bereitstellung eines Pilot-Laserstrahls (30), die derart ausgebildet ist, um eine Fluoreszenz pathogener Bakterien zu induzieren, welche den Bearbeitungsbereich markiert und eine Aufbringeinrichtung (4) zum Aufbringen eines Absorbermaterials (6) auf einen zu bearbeitenden Bereich von Zahnhartmaterial, wobei die erste Laserstrahlquelle (2) derart ausgebildet ist, dass durch die Absorption des Bearbeitungs-Laserstrahls (20) das Absorbermaterial (6) in einen energetisch höheren Energiezustand versetzt wird.

## Beschreibung

In der Zahnheilkunde, insbesondere in der Kariestherapie, besteht ein wesentliches Ziel darin, konventionelle mechanische Bohrvorrichtung ganz oder zumindest teilweise durch Laserbearbeitungsgeräte zu ersetzen.

Dazu werden bislang gepulste Er:YAG-Lasersysteme eingesetzt, um eine qualitativ hochwertige Zahnabtragung zu ermöglichen.

### Technisches Gebiet der Erfindung

Die Erfindung betrifft eine Laservorrichtung zur Bearbeitung von Zahnhartmaterial.

Die Erfindung liegt im technischen Gebiet von Laserbearbeitungsgeräten für die Zahnheilkunde.

### Stand der Technik

Aus der EP 2389271 B1 ist eine Laserbearbeitungsvorrichtung zur Ablation von Material bekannt, bei denen ein Photosensitizer mit einem gepulsten Bearbeitungs-Laserstrahl angeregt wird und der angeregte Photosensitizer Sauerstoffradikale freisetzt, die den Laser-Ablationsprozess begünstigen.

Bei der bislang kommerziell angebotenen Laserbearbeitungsvorrichtung auf der Basis eines gepulsten Er.YAG-Lasers zur Ablation von Zahn-Material wird Wasser verwendet, um durch die Absorption des Laserstrahls durch den Wasserfilm den Ablationsprozess von Zahnhartmaterial zu begünstigen. Insbesondere kann durch die initiale Absorption durch Wasser der Schwellwert für den Ablationsprozess gesenkt werden.

Übliche Zahnbearbeitungslaser wie der Er:YAG-Laser verfügen über kein Modul zur on-line Überwachung und Analyse. Zudem sind sie in der Präzision den Ultrakurzpulslasern unterlegen.

Die kommerziell verfügbaren Vorrichtungen haben den Nachteil, dass ein Wasserfilm verwendet werden muss, der zur Bildung von Aerosolen führt. Aerosole begünstigen die Verbreitung von Viren und Bakterien. Die Verwendungen eines Photosensibilisators hat den Nachteil, dass bislang nur wenige Photosensibilisatoren klinisch einsetzbar sind und sie benötigt werden, um Sauerstoffradikale zu erzeugen. Sauerstoffradikale schädigen jedoch Zahnweichgewebe.

### Beschreibung der Erfindung

Die Aufgabe der Erfindung ist es daher, eine Laservorrichtung bereitzustellen, welche die Nachteile im Stand der Technik überwindet und die einen präzisen Materialabtrag ermöglicht ohne dabei umliegendes Zahnweichgewebe zu schädigen.

Die Aufgabe wird durch eine Laservorrichtung zur Bearbeitung von Zahnhartmaterial mit den Merkmalen des unabhängigen Anspruchs 1 gelöst. Vorteilhafte Ausführungsformen bilden den Gegenstand der zugehörigen Unteransprüche.

Die Erfindung umfasst eine Laservorrichtung zur Bearbeitung von Zahnhartmaterial, umfassend (i) eine erste ultrakurz gepulste Laserstrahlquelle zur Bereitstellung eines Bearbeitungs-Laserstrahls, die derart ausgebildet ist, um den Bearbeitungs-Laserstrahl auf einen vorbestimmten Bearbeitungsbereich von Zahnhartmaterial aufzubringen, (ii) eine zweite Laserstrahlquelle zur Bereitstellung eines Pilot-Laserstrahls, die derart ausgebildet ist, um eine Fluoreszenz pathogener Bakterien zu induzieren, welche den Bearbeitungsbereich markiert und (iii) eine Aufbringeinrichtung zum Aufbringen eines Absorbermaterials auf einen zu bearbeitenden Bereich von Zahnhartmaterial, wobei die erste Laserstrahlquelle derart ausgebildet ist, dass durch die Absorption des Bearbeitungs-Laserstrahls das Absorbermaterial in einen energetisch höheren Energiezustand versetzt wird. Dadurch kann ein präziser Abtrag des zu bearbeitenden Materials durch Multiphotonen-Absorption bei einer deutlich geringeren Ablationsschwelle als ohne Absorbermaterial erfolgen, ohne dabei Zahnweichgewebe zu schädigen.

Besonders vorteilhaft ist, wenn die Pulsdauer des Bearbeitungs-Laserstrahls in einem Bereich von 15fs bis 20ps, bevorzugt in einem Bereich von 20fs bis 1ps, besonders bevorzugt in einem Bereich von 200fs bis 1ps liegt. Dies führt zu einem präzisen Abtrag durch Multiphotonen-Ablation ohne destruktive Nebenwirkungen z.B. durch die destruktive Wirkung von Schockwellen.

Ein vorteilhafter Aspekt sieht vor, dass die Wellenlänge des Pilot-Laserstrahls in einem Bereich von 400 bis 630nm, bevorzugt in einem Bereich von 400 bis 540nm, besonders bevorzugt in einem Bereich von 400 bis 410nm liegt. Dadurch wird es möglich, Porphyrin-produzierende pathogene Bakterien effizient zur Fluoreszenz im roten Spektralbereich anzuregen.

Nach einem bevorzugten Aspekt umfasst die Laservorrichtung ferner wenigstens einen Photonendetektor zur Detektion einer Fluoreszenz im roten Spektralbereich und/oder einer Frequenzverdopplung und/oder einer Frequenzverdreifachung und/oder zur Detektion des während der Bearbeitung von Zahnhartmaterial entstehenden Plasmas. Dies ermöglicht die Überwachung des Materialabtrags während der Bearbeitung von Zahnhartmaterial

Nach einem bevorzugten Aspekt umfasst das Absorbermaterial Pigmente eines schwarzen Markers und/oder schwarzer und/oder blauer Tinte. Es können somit herkömmliche Marker und/oder Tinte als kostengünstiges Absorbermaterial eingesetzt werden.

Vorteilhafterweise wird das Absorbermaterial aufgesprüht und/oder aufgepinselt und/oder aufgemalt. Dies ermöglicht ein zuverlässiges und schnelles Aufbringen des Aborbermaterials auf das Zahnhartmaterial.

Vorteilhafterweise ist die Aufbringeinrichtung eine Sprühvorrichtung und/oder ein Pinsel und/oder ein Stift. Dies ermöglicht ein gleichmäßiges und schnelles Auftragen des Absorbermaterials auf das Zahnhartmaterial.

Es hat sich als vorteilhaft herausgestellt, wenn ein Verfahren zur Bearbeitung von Zahnhartmaterial mittels einer Laservorrichtung die Schritte:
b) Bereitstellung eines gepulsten Bearbeitungs-Laserstrahls mittels einer ersten ultrakurz gepulsten Laserstrahlquelle,
c) Aufbringen eines Absorbermaterials auf einen vorbestimmten Bereich von Zahnhartmaterial mittels einer Aufbringeinrichtung,
d) Bestrahlung des Absorbermaterials mit dem Bearbeitungs-Laserstrahl, wobei die Intensität und Wellenlänge des Bearbeitungs-Laserstrahls derart gewählt wird, dass durch die Absorption des Bearbeitungs-Laserstrahls das Absorbermaterial in einen energetisch höheren Energiezustand versetzt wird, umfasst.

Dies ermöglicht den Einsatz von kostengünstigeren Lasersystemen mit geringerem Energiebedarf, weil der Abtrag des zu bearbeitenden Zahnhartmaterial durch Multiphotonen-Absorption bei einer deutlich geringeren Ablationsschwelle als ohne Absorbermaterial erfolgen kann.

Ein vorteilhafter Aspekt sieht vor, dass der vorbestimmte Bereich von Zahnhartmaterial in einem Schritt a) mit einem Pilot-Laserstrahl bestrahlt wird, wobei die Wellenlänge des Pilot-Laserstrahls derart gewählt wird, dass pathogene Bakterien Fluoreszenz emittieren, wodurch der vorbestimmte Bereich von Zahnhartmaterial auf einen durch pathogene Bakterien geschädigten Bearbeitungsbereich eingegrenzt wird. Dies ermöglicht eine Kennzeichnung der Position, auf die der Bearbeitungs-Laserstrahl gerichtet werden muss.

Besonders vorteilhaft ist, wenn das Aufbringen des Absorbermaterials im Schritt c) ausschließlich in dem durch pathogene Bakterien geschädigten Bearbeitungsbereich erfolgt. Dies ermöglicht eine wesentlich schonendere Behandlung, ohne gesundes Zahnhartmaterial durch Laserstrahlung anzugreifen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Es zeigen:
Fig. 1 eine schematische Darstellung einer erfindungsgemäßen Laservorrichtung, und
Fig. 2 eine schematische Darstellung eines Ablaufs eines erfindungsgemäßen Verfahrens zur Bearbeitung von Zahnhartmaterial mittels einer erfindungsgemäßen Laservorrichtung.

### Ausführliche Beschreibung der Zeichnungen

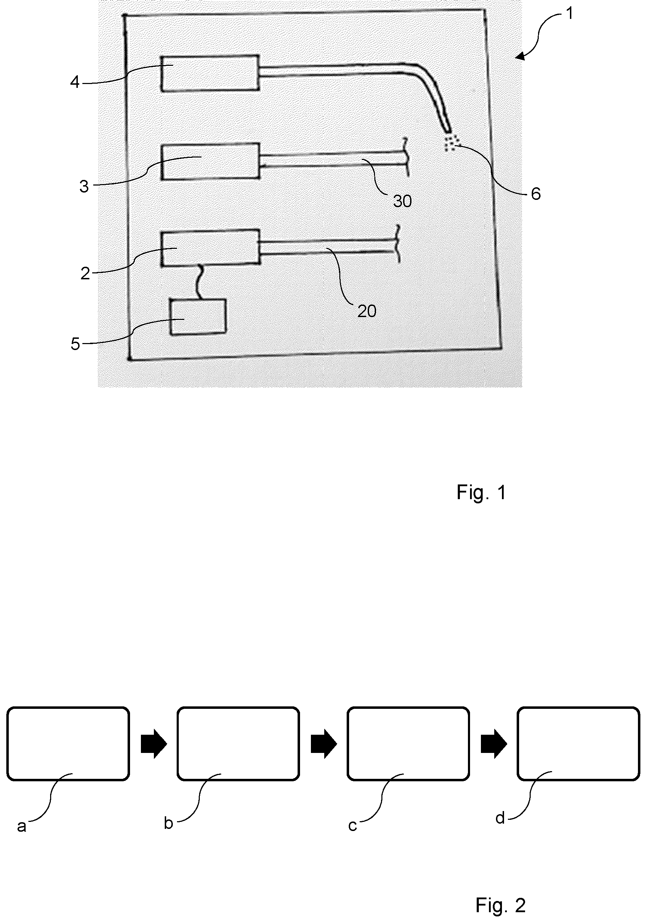

Fig. 1 zeigt eine erfindungsgemäße Laservorrichtung 1 zur Bearbeitung von Zahnhartmaterial, umfassend eine erste ultrakurz gepulste Laserstrahlquelle 2 zur Bereitstellung eines Bearbeitungs-Laserstrahls 20, die derart ausgebildet ist, um den Bearbeitungs-Laserstrahl 20 auf einen vorbestimmten Bearbeitungsbereich von Zahnhartmaterial aufzubringen. Eine zweite Laserstrahlquelle 3, die beispielsweise eine kontinuierlich emittierende Strahlquelle zur Bereitstellung eines Pilot-Laserstrahls 30 ist und, die derart ausgebildet ist, um eine Fluoreszenz pathogener Bakterien zu induzieren, welche den Bearbeitungsbereich markiert. Dies beruht darauf, dass die pathogenen beispielsweise Porphyrin-produzierenden Bakterien Teile des Pilot-Laserstrahls 30 absorbieren und eine Fluoreszenz induzieren. Die Fluoreszenz liegt beispielsweise im roten und im nahen infraroten Spektralbereich mit Maxima bei etwa 635 - 710nm. Die Laservorrichtung umfasst außerdem eine Aufbringeinrichtung 4 zum Aufbringen eines Absorbermaterials 6 auf einen zu bearbeitenden Bereich von Zahnhartmaterial. Das Absorbermaterial 6 kann Teile des Bearbeitungs-Laserstrahls 20 durch Einphotonen-Absorption absorbieren. Die erste Laserstrahlquelle 2 ist derart ausgebildet, dass durch die Absorption des Bearbeitungs-Laserstrahls 20 das Absorbermaterial 6 in einen energetisch höheren Energiezustand versetzt wird. Es kommt also zu einer Wechselwirkung des Bearbeitungs-Laserstrahls 20 mit dem Absorbermaterial 6, wodurch mittels Einphotonen-Absorption energetisch höhere Energiezustände besetzt werden können.

Die Aufbringeinrichtung 4 ist eine Sprühvorrichtung und/oder ein Pinsel und/oder ein Stift.

Die Wellenlänge des Pilot-Laserstrahls 30 liegt in einem Bereich von 400 bis 630nm, bevorzugt in einem Bereich von 400 bis 540nm, besonders bevorzugt in einem Bereich von 400 bis 410nm.

Die Pulsdauer des Bearbeitungs-Laserstrahls 20 liegt in einem Bereich von 15fs bis 20ps, bevorzugt in einem Bereich von 20fs bis 1ps, besonders bevorzugt in einem Bereich von 200fs bis 1ps liegt.

Die Laservorrichtung 1 umfasst ferner wenigstens einen Photonendetektor 5 zur Detektion einer Fluoreszenz im roten Spektralbereich und/oder einer Frequenzverdopplung und/oder einer Frequenzverdreifachung und/oder zur Detektion des während der Bearbeitung von Zahnhartmaterial entstehenden Plasmas. Die Fluoreszenz ist beispielsweise eine Zweiphotonen-angeregte und/oder Dreiphotonenangeregte Fluoreszenz.

In Fig. 2 ist eine schematische Darstellung eines Ablaufs eines erfindungsgemäßen Verfahrens zur Bearbeitung von Zahnhartmaterial mittels einer erfindungsgemäßen Laservorrichtung 1 gezeigt. Das Verfahren umfasst die Schritte:
b) Bereitstellung eines gepulsten Bearbeitungs-Laserstrahls 20 mittels einer ersten ultrakurz gepulsten Laserstrahlquelle 2,
c) Aufbringen eines Absorbermaterials 6 auf einen vorbestimmten Bereich von Zahnhartmaterial mittels einer Aufbringeinrichtung 4,
d) Bestrahlung des Absorbermaterials 6 mit dem Bearbeitungs-Laserstrahl 20, wobei die Intensität und Wellenlänge des Bearbeitungs-Laserstrahls 20 derart gewählt wird, dass durch die Absorption des Bearbeitungs-Laserstrahls 20 das Absorbermaterial 6 in einen energetisch höheren Energiezustand versetzt wird.

Bei der Absorption des Bearbeitungs-Laserstrahls 20 handelt es sich beispielsweise um eine Einphotonen-Absorption.

In einem Schritt a) wird der vorbestimmte Bereich von Zahnhartmaterial mit einem Pilot-Laserstrahl 30 bestrahlt, wobei die Wellenlänge des Pilot-Laserstrahls 30 derart gewählt wird, dass pathogene Bakterien Fluoreszenz emittieren, wodurch der vorbestimmte Bereich von Zahnhartmaterial auf einen durch pathogene Bakterien geschädigten Bearbeitungsbereich eingegrenzt wird.

Das Aufbringen des Absorbermaterials 6 im Schritt c) erfolgt ausschließlich in dem durch pathogene Bakterien geschädigten Bearbeitungsbereich.

Das Absorbermaterial 6 umfasst Pigmente eines schwarzen Markers und/oder schwarzer und/oder blauer Tinte und wird aufgesprüht und/oder aufgepinselt und/oder aufgemalt.

### Bezugszeichenliste

- 1: Laservorrichtung
- 2: erste Laserstrahlquelle
- 3: zweite Laserstrahlquelle
- 4: Aufbringeinrichtung
- 5: Photonendetektor
- 6: Absorbermaterial

- 20: Bearbeitungs-Laserstrahl
- 30: Pilot-Laserstrahl

## Patentansprüche

1. Laservorrichtung (1) zur Bearbeitung von Zahnhartmaterial, umfassend eine erste ultrakurz gepulste Laserstrahlquelle (2) zur Bereitstellung eines Bearbeitungs-Laserstrahls (20), die derart ausgebildet ist, um den Bearbeitungs-Laserstrahl (20) auf einen vorbestimmten Bearbeitungsbereich von Zahnhartmaterial aufzubringen, eine zweite Laserstrahlquelle (3) zur Bereitstellung eines Pilot-Laserstrahls (30), die derart ausgebildet ist, um eine Fluoreszenz pathogener Bakterien zu induzieren, welche den Bearbeitungsbereich markiert und eine Aufbringeinrichtung (4) zum Aufbringen eines Absorbermaterials (6) auf einen zu bearbeitenden Bereich von Zahnhartmaterial, wobei die erste Laserstrahlquelle (2) derart ausgebildet ist, dass durch die Absorption des Bearbeitungs-Laserstrahls (20) das Absorbermaterial (6) in einen energetisch höheren Energiezustand versetzt wird.

2. Laservorrichtung (1) nach Anspruch 1, wobei die Wellenlänge des Pilot-Laserstrahls (30) in einem Bereich von 400 bis 630nm, bevorzugt in einem Bereich von 400 bis 540nm, besonders bevorzugt in einem Bereich von 400 bis 410nm liegt.

3. Laservorrichtung (1) nach einem der vorhergehenden Ansprüche, wobei die Pulsdauer des Bearbeitungs-Laserstrahls (20) in einem Bereich von 15fs bis 20ps, bevorzugt in einem Bereich von 20fs bis 1ps, besonders bevorzugt in einem Bereich von 200fs bis 1ps liegt.

4. Laservorrichtung (1) nach einem der vorhergehenden Ansprüche, ferner umfassend wenigstens einen Photonendetektor (5) zur Detektion einer Fluoreszenz im roten Spektralbereich und/oder einer Frequenzverdopplung und/oder einer Frequenzverdreifachung und/oder zur Detektion des während der Bearbeitung von Zahnhartmaterial entstehenden Plasmas.

5. Laservorrichtung (1) nach einem der vorhergehenden Ansprüche, wobei die Aufbringeinrichtung (4) eine Sprühvorrichtung und/oder ein Pinsel und/oder ein Stift ist.

6. Verfahren zur Bearbeitung von Zahnhartmaterial mittels einer Laservorrichtung (1) nach einem der vorhergehenden Ansprüche, umfassend die Schritte:
b) Bereitstellung eines gepulsten Bearbeitungs-Laserstrahls (20) mittels einer ersten ultrakurz gepulsten Laserstrahlquelle (2),
c) Aufbringen eines Absorbermaterials (6) auf einen vorbestimmten Bereich von Zahnhartmaterial mittels einer Aufbringeinrichtung (4),
d) Bestrahlung des Absorbermaterials (6) mit dem Bearbeitungs-Laserstrahl (20), wobei
die Intensität und Wellenlänge des Bearbeitungs-Laserstrahls (20) derart gewählt wird, dass durch die Absorption des Bearbeitungs-Laserstrahls (20) das Absorbermaterial (6) in einen energetisch höheren Energiezustand versetzt wird.

7. Verfahren nach Anspruch 6, wobei der vorbestimmte Bereich von Zahnhartmaterial in einem Schritt a) mit einem Pilot-Laserstrahl (30) bestrahlt wird, wobei die Wellenlänge des Pilot-Laserstrahls (30) derart gewählt wird, dass pathogene Bakterien Fluoreszenz emittieren, wodurch der vorbestimmte Bereich von Zahnhartmaterial auf einen durch pathogene Bakterien geschädigten Bearbeitungsbereich eingegrenzt wird.

8. Verfahren nach einem der vorhergehenden Ansprüche, wobei das Aufbringen des Absorbermaterials (6) im Schritt c) ausschließlich in dem durch pathogene Bakterien geschädigten Bearbeitungsbereich erfolgt.

9. Verfahren nach einem der vorhergehenden Ansprüche, wobei das Absorbermaterial (6) Pigmente eines schwarzen Markers und/oder schwarzer und/oder blauer Tinte umfasst.

10. Verfahren nach einem der vorhergehenden Ansprüche, wobei das Absorbermaterial (6) aufgesprüht und/oder aufgepinselt und/oder aufgemalt wird.
